# EUROPEAN PATENT APPLICATION

(11) **EP 2 403 153 A1**
(43) Date of publication of application: **04.01.2012**
(21) Application number: 09840717.4
(22) Date of filing: 28.10.2009
(51) Int. Cl.: H04B 7/005, H04B 1/10, H04W 16/14

(54) **RECEPTION APPARATUS AND RECEPTION METHOD**

(30) Priority: 26.02.2009 JP 2009044597
(71) Applicant: Panasonic Corporation, Kadoma-shi Osaka 571-8501 (JP)
(72) Inventor: SUGAWARA, Tomohiro, Osaka 540-6207 (JP); SOTOYAMA, Takayuki, Osaka 540-6207 (JP)
(74) Representative: Grünecker, Kinkeldey, Stockmair & Schwanhäusser
(86) International application number: PCT/JP2009/005702
(87) International publication number: WO 2010/097863

(57) **Abstract**

A reception apparatus and a reception method improving the effect of interference suppression and reducing interference to the side subject to interference. A satellite signal demodulation unit (201) demodulates and performs a CRC check on a received satellite signal, while a satellite signal modulation unit (202) modulates the demodulated results outputted from the satellite signal demodulation unit (201). An adder (203) subtracts an output signal of the satellite signal modulation unit(202) from the received satellite signal, and an output switching unit (204) feeds back the signal outputted from the adder (203) to an IMT transmission apparatus (100) in cases when the CRC check result outputted from the satellite signal demodulation unit (201) is "pass". Further, when the CRC check result is "fail", the output switching unit (204) feeds back the received satellite signal to the IMT transmission apparatus (100).

## Description

### Technical Field

The present invention relates to a receiving apparatus and receiving method.

### Background Art

At the World Radiocommunication Conference (WRC-07) held in the end of the year of 2007, a new frequency band was allocated for a mobile communication service of IMT-Advanced. Thus, over 100 countries around the world announce to use a band of 3.4 to 3.6 GHz for an IMT-Advanced service and this frequency band became a de facto international frequency for mobile communication.

This band is called "C-band" and is still used in fixed satellite communication (FSS: Fixed Satellite Service), and is used for TV broadcasting or as an emergency channel in a time of disaster mainly in equatorial countries where there are drastic changes in precipitation or countries with a broad expanse of land. In such countries, FSS constitutes important communication means. Therefore, when sharing the same frequency with FSS, IMT-Advanced needs to prevent interference with FSS.

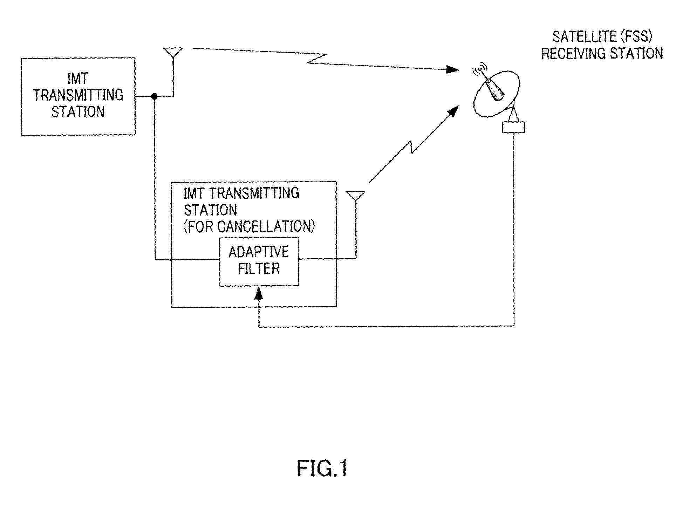

As one method of preventing interference with another system of the same frequency, interference suppression processing using a noise canceller can be considered. Such a technique is disclosed in non-patent literature 1 or the like. Non-patent literature 1 discloses that an interference signal at a receiving station on an interference receiving side is fed back to a transmitting station on an interference causing side, and the transmitting station repeatedly updates coefficients of an adaptive filter for interference suppression based on the fed back signal to thereby reduce interference with the interference receiving side (see FIG.1).

### Citation List

### Non-Patent Literature

NPL 1
   "Adaptive Signal Processing Algorithm" written by Yoji Iikuni, Baifukan

### Summary of Invention

### Technical Problem

When processing as shown in FIG.1 is assumed to be applied to a real environment, a feedback signal from the interference receiving side includes not only an interference signal but also a communication signal for the interference receiving side (signal from a satellite). When the transmitting station updates the adaptive filter using the feedback signal including signals other than the interference signal, convergence characteristics deteriorate, thereby causing the interference suppression effect to deteriorate.

It is therefore an object of the present invention to provide a receiving apparatus and receiving method to improve the interference suppression effect and reduce interference on the interference receiving side.

### Solution to Problem

A receiving apparatus according to the present invention adopts a configuration including a demodulation section that demodulates a received signal, a modulation section that modulates the demodulated signal, an addition section that subtracts the modulated signal from the received signal and a transmitting section that feeds back the subtraction result to a transmitting apparatus on an interference causing side.

A receiving method according to the present invention includes a demodulation step of demodulating a received signal, a modulation step of modulating the demodulated signal, an addition step of subtracting the modulated signal from the received signal and a transmission step of feeding back the subtraction result to a transmitting apparatus on an interference causing side.

### Advantageous Effects of Invention

According to the present invention, it is possible to improve the interference suppression effect and reduce interference on the interference receiving side.

### Brief Description of Drawings

FIG.1 is a diagram illustrating interference suppression processing using a noise canceller disclosed in non-patent literature 1;
FIG.2 is a block diagram illustrating a configuration of an IMT transmitting apparatus according to an embodiment of the present invention;
FIG.3 is a block diagram illustrating a configuration of an FSS receiving apparatus according to the embodiment of the present invention;
FIG.4 is a diagram illustrating how the interference suppression effect is improved; and
FIG.5 is a block diagram illustrating another configuration of the IMT transmitting apparatus according to the embodiment of the present invention.

### Description of Embodiment

Hereinafter an embodiment of the present invention will be described in detail with reference to the accompanying drawings.

### (Embodiment)

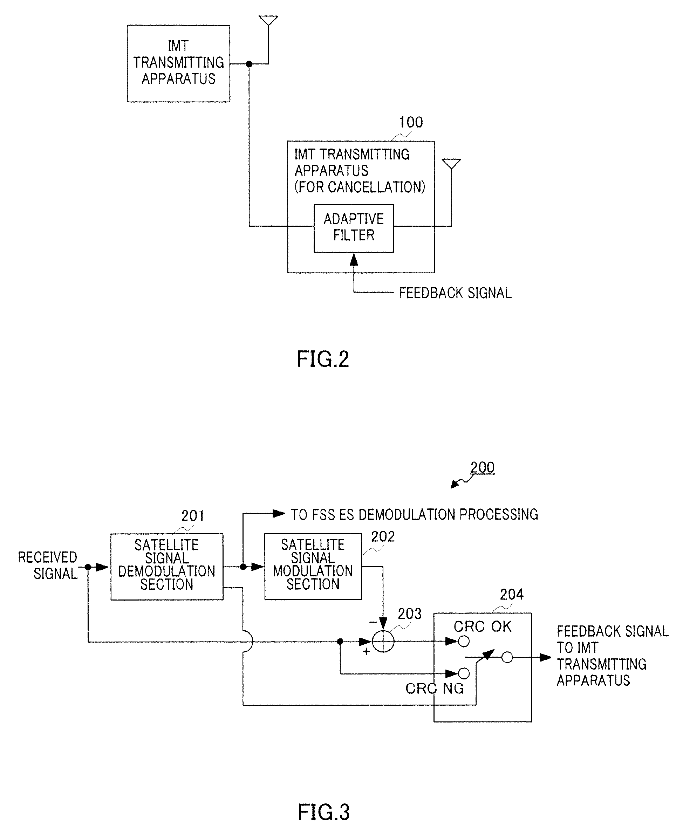

FIG.2 is a block diagram showing a configuration of IMT transmitting apparatus 100 according to an embodiment of the present invention. In this figure, IMT transmitting apparatus 100 performs transmission processing of IMT-Advanced and transmits an IMT-Advanced transmission signal. Furthermore, IMT transmitting apparatus 100 updates an adaptive filter based on a feedback signal transmitted from an FSS receiving apparatus and the FSS receiving apparatus transmits a signal for reducing interference.

FIG.3 is a block diagram showing a configuration of FSS receiving apparatus 200 according to the embodiment of the present invention. In this figure, satellite signal demodulation section 201 performs demodulation and CRC check for a received satellite signal (received satellite signal), outputs the demodulation result to satellite signal modulation section 202 and outputs the CRC check result to output switching section 204.

Satellite signal modulation section 202 modulates the demodulation result outputted from satellite signal demodulation section 201 and outputs the result to adder 203.

Adder 203 subtracts (cancels) the output signal of satellite signal modulation section 202 from the received satellite signal and outputs the subtraction result to output switching section 204. The subtraction result mainly includes the interference signal transmitted from IMT transmitting apparatus 100.

When the CRC check result outputted from satellite signal demodulation section 201 is OK, output switching section 204 feeds back the signal outputted from adder 203 to IMT transmitting apparatus 100. On the other hand, when the CRC check result is NG, output switching section 204 feeds back the received satellite signal to IMT transmitting apparatus 100. Here, when the CRC check result is NG, the received satellite signal is fed back as is, because performing cancellation processing for the received satellite signal using an erroneous demodulation result would cause the interference suppression effect to deteriorate.

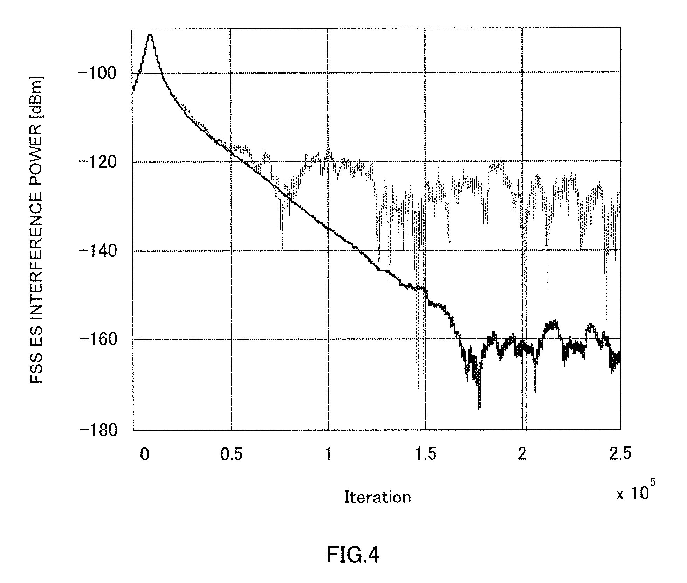

Thus, the feedback from FSS receiving apparatus 200 to IMT transmitting apparatus 100 makes it possible to reduce interference power in FSS receiving apparatus 200. FIG.4 shows how this looks. In FIG.4, the vertical axis shows FSS ES interference power [dBm] and the horizontal axis shows the number of times the adaptive filter is updated. Furthermore, a thick line represents performance of FSS receiving apparatus 200 and a thin line represents performance of the receiving station on the interference receiving side described in non-patent literature 1 or the like.

Thus, according to the present embodiment, when the CRC check result of the received satellite signal is OK, the demodulated received satellite signal is modulated and a signal after subtracting the modulated satellite signal from the received satellite signal is fed back to IMT transmitting apparatus 100, whereas when the CRC check result of the received satellite signal is NG, the received satellite signal is fed back to the IMT transmitting apparatus, and it is thereby possible to improve the interference suppression effect and reduce interference in the FSS receiving apparatus which is the interference receiving side.

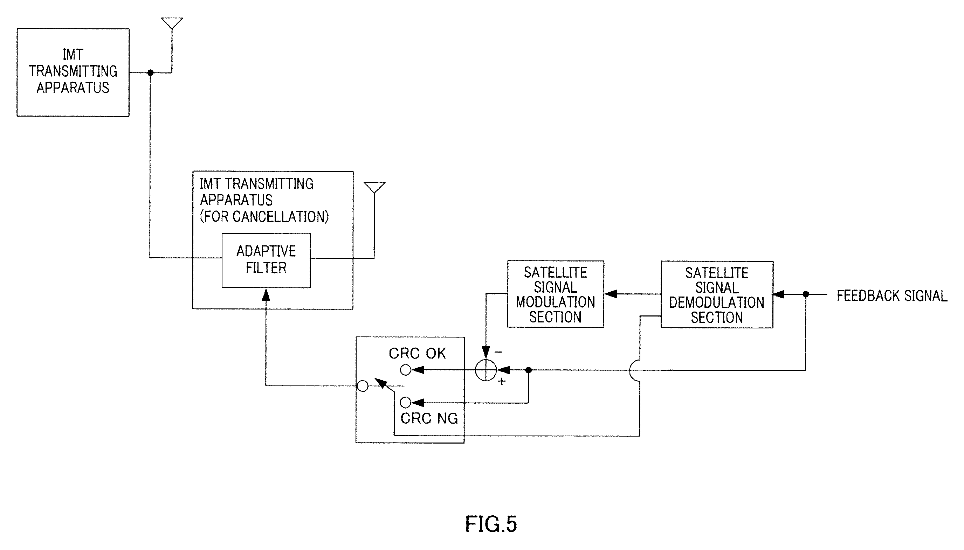

The present embodiment has been described assuming that the feedback signal is switched according to the CRC check result of the received satellite signal, but the present embodiment may also be adapted such that the FSS receiving apparatus feeds back the received satellite signal, and the IMT transmitting apparatus performs demodulation and CRC check for the fed back received satellite signal as shown in FIG.5 and outputs a signal after subtracting the signal obtained by modulating the demodulated received satellite signal from the received satellite signal or the fed back received satellite signal to the adaptive filter depending on the CRC check result.

The disclosure of Japanese Patent Application No.2009-044597, filed on February 26, 2009, including the specification, drawings and abstract, is incorporated herein by reference in its entirety.

### Industrial Applicability

The receiving apparatus and receiving method according to the present invention is applicable to an FSS system or the like.

## Claims

1. A receiving apparatus comprising:
a demodulation section that demodulates a received signal;
a modulation section that modulates the demodulated signal;
an addition section that subtracts the modulated signal from the received signal; and
a transmitting section that feeds back the subtraction result to a transmitting apparatus on an interference causing side.

2. The receiving apparatus according to claim 1, wherein the transmitting section feeds back, when the demodulated signal includes no error, the subtraction result to the transmitting apparatus on the interference causing side.

3. The receiving apparatus according to claim 1, wherein the transmitting section feeds back, when the demodulated signal includes an error, the received signal to the transmitting apparatus on the interference causing side.

4. A receiving method comprising:
a demodulation step of demodulating a received signal;
a modulation step of modulating the demodulated signal;
an addition step of subtracting the modulated signal from the received signal; and
a transmission step of feeding back the subtraction result to a transmitting apparatus on an interference causing side.
